# EUROPEAN PATENT APPLICATION

(11) **EP 1 486 319 A1**
(43) Date of publication of application: **15.12.2004**
(21) Application number: 03712736.2
(22) Date of filing: 18.03.2003
(51) Int. Cl.: B29C 70/00, B29D 30/38

(54) **METHOD AND DEVICE FOR COATING STEEL CORD AND STEEL WIRE WITH RUBBER**

(30) Priority: 18.03.2002 JP 2002073718
(71) Applicant: Kabushiki Kaisha Bridgestone, Chuo-ku, Tokyo 104-8340 (JP)
(72) Inventor: IWASAKI, Y.; c/o K.K. Bridgeston, Kodaira-shi, Tokyo 187-8531 (JP)
(74) Representative: Whalley, Kevin
(86) International application number: PCT/JP2003/003221
(87) International publication number: WO 2003/078140

(57) **Abstract**

The steel wire 1 to be coated with rubber is pre-heated by passing through the first electro-magnetic induction heating device 10, the pre-heated steel wire is forwarded to the calendar device 30 and after coating both surfaces of the respective sides of the steel wire 1 with rubber layers through the calendar device 30, thus coated steel wire 1 with the rubber 2 is subjected again to the electro-magnetic induction heating by means of the second electro-magnetic induction heating device 20 placed at a position after the calendar device 30 thereby intensifying the adhesive strength between the steel wire 1 and the rubber in the vicinity of the boundary surface at the steel wire 1 so as to enhance the improvement of the adhesive strength between the steel code · steel wire and the rubber with which the foregoing is coated.

## Description

### [Field of Invention]

The present invention relates to a method of producing steel code · steel wire with rubber coated such as beed wire and steel belt and specifically relates to a method of coating steel code · steel wire with rubber and an apparatus for coating rubber thereon.

### [Description of the Prior Art]

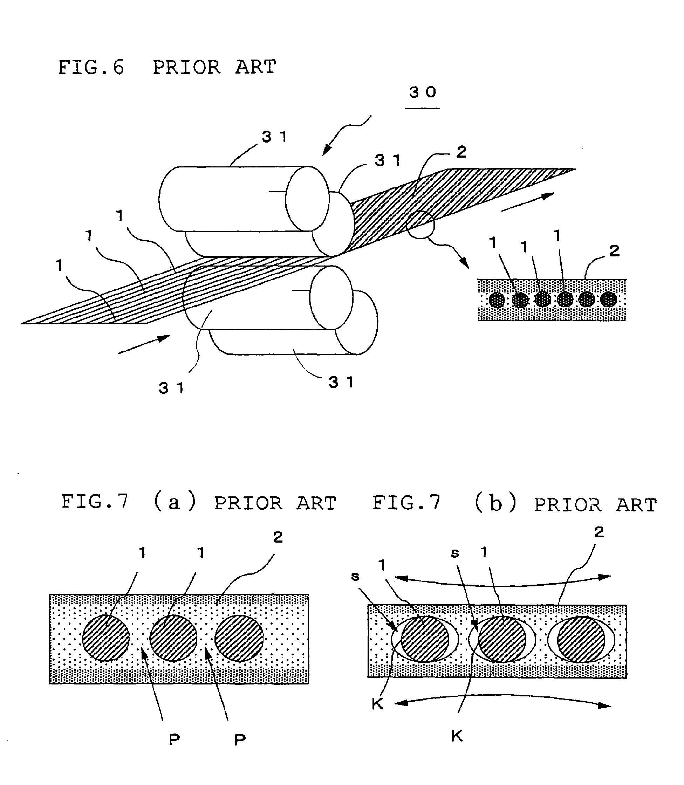

Conventionally, for example a calendar device 30 as shown by Fig. 6 is used for producing a ply and a belt which are formed by coating a thin rubber layer on the surfaces of both sides of a steel code and an interwound or twisted woven code material, thus sandwiched by the rubber layers therebetween. This method is carried out by, while passing the steel wire 1 which is spread out in a sheet, between the calendar rolls 31, supplying unshown rubber material to the steel wire being passed through as above, and thus surfaces on both sides of the steel wire are coated with rubber 2. According to this method, coating of the steel wire 1 with rubber 2 and bonding of the steel wire 1 and the rubber 2 are carried out simultaneously under the condition of being pressurized by rolling load being exerted thereon by the calendar rolls 31.
However, according to the foregoing method, as shown by Fig. 7 (a), since rubber coating is carried out by applying the load in up and down direction only, the rubber which enters into the neighborhood P of the steel wire 1 becomes rare and as a result adhesion strength between the steel wire 1 and the rubber 2 was inevitably weak; and this causes difficulties involved in the problems such-that as shown by Fig. 7(b) when the steel wire is subjected to a strain in a transversal direction (perpendicular to rolling direction) during the molding process or during vulcanization process of the tire, at the boundary surface formed between the steel wire 1 and the rubber 2, peeling off appearing at the boundary, that is formation of gaps due to mutual removal by stripping off between the steel wire 1 and the rubber 2, becomes easily to be caused and at the worst case a coating failure such that exposure of part of the steel wire 1 to the environment will be caused.

### Summary of the Invention

The present invention has been made to cope with foregoing problems and its object is to provide a method for coating the steel code · steel wire with rubber securely as well as for improving the adhesion strength between the steel code · steel wire and the coating rubber and also for providing an apparatus thereof.

The first aspect of the invention sets forth a method of coating a steel code · steel wire with a rubber comprising steps of covering the steel code · steel wire a rubber layer and boundary the steel code · steel wire and the rubber layer wherein, the steel code · steel wire, after being covered with the rubber layer, is subjected to an electro-magnetic induction heating so as to raise the temperature of the steel code · steel wire covered with the rubber layer, thereby enhancing improvement on the adhesive strength at the boundary surface between the steel code · steel wire and the rubber.
The second aspect of the invention sets forth method of coating the steel code · steel wire with the rubber according to the first aspect wherein the steel code · steel wire is heated to a temperature falling in the range of 130∼150°C.

The third aspect of the invention sets forth the method of coating the steel code · steel wire with the rubber according to the first aspect or the second aspect wherein, the electro-magnetic induction heating is carried out while a pressurizing force is being applied to the steel code · steel wire.

The fourth aspect of the invention sets forth the method of coating the steel code · steel wire with the rubber according to one of the first aspect through the third aspect wherein, temperature of the rubber to be heated through the electro-magnetic induction heating is to fall in the range of 70∼90°C.

The fifth aspect of invention sets forth the method of coating a steel code · steel wire a rubber comprising steps of covering the steel code · steel wire with a rubber layer and bonding the steel code steel wire and the rubber layer wherein, an electro-magnetic induction heating is applied previously to the steel code · steel wire at a stage prior to be covered with the rubber layer so that coating the steel code · steel wire with the rubber can be carried out under the condition that temperature of the steel code · steel wire has been raised.

The sixth aspect of the invention sets forth the apparatus for coating with a rubber having a means for covering a steel code · steel wire with a rubber layer wherein, an electro-magnetic induction heating means is provided at either one of or both of positions before and after the means for covering the steel code · steel wire with the rubber layer.

### Brief Descriptions of the Drawings

Fig.1 shows a schematic diagram for depicting the most preferable embodiment, according to the present invention.
Fig.2 shows a sectional view of a steel wire with rubber coated.
Fig.3 shows another embodiment depicting the method for coating with a rubber.
Fig. 4 shows the other embodiment depicting the method for coating with a rubber.
Fig.5 shows an example of arrangement of electro-magnetic induction heating means.
Fig. 6 shows a conventional method for coating with a rubber.
Fig. 7 (a) and Fig.7 (b) shows sectional view of a steel wire with a rubber coated according to a conventional method.

### Description of the Preferred Embodiment

A description will be given on the most preferable embodiment referring to accompanied drawings.

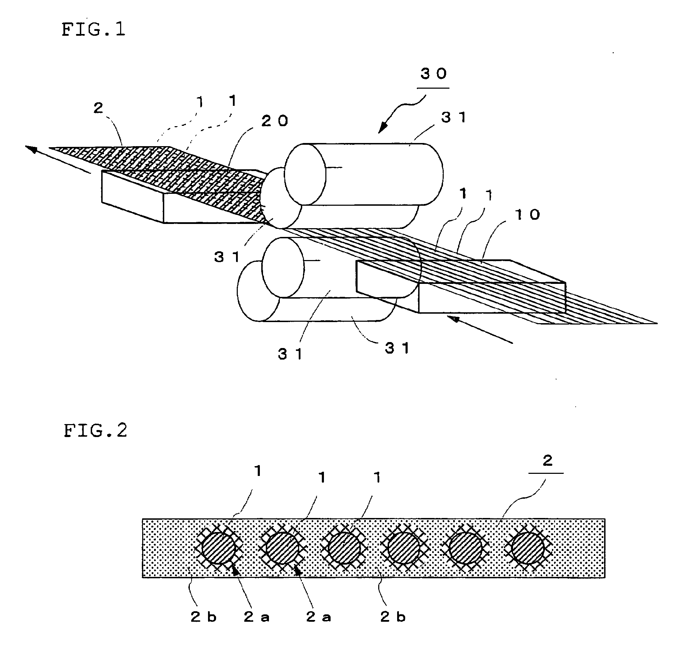

Fig.1 shows a schematic diagram depicting the most preferable embodiment and according to this diagram, at first, the steel wire to be coated with the rubber, which was already subjected to be formed into sheet, is passed through the electro-magnetic induction heating device 10 and after subjected to the heating treatment the steel wire is placed into the calendar roll device 30. In this calendar device the steel wire is passed between calendar rolls 31 and also both surfaces of steel wire 1 are covered with the rubber 2 while unshown rubber material is being supplied to the calendar roll 31. In the plating layer of the steel wire 1, which was already subjected to pre-heating treatment through the foregoing electro-magnetic induction heating means, a needle like composition is formed in the plating lawyer (usually, blast coating) and this needle like composition entangles into the rubber 2 during passing through the calendar rolls and thus improvement of increasing the adhesion strength between the steel wire 1 and the rubber 2 is enhanced.
In this embodiment, further arrangement is made to place the second electro-magnetic induction heating device 20 positioned after the foregoing calendar device 30 so that the above steel wire 1 with rubber coated undergoes the electro-magnetic induction heating treatment again. The electro-magnetic induction heating means heats the steel wire 1, i.e. the metal, only and therefore as shown by Fig.2 in the rubber 2 only the rubber 2a near the surface contacting with the steel wire 1 is heated through a thermal conduction from the wire by which the rubber 2a becomes relatively harder than the region surrounding the above boundary surface, namely rubber 2b and as a result the adhesion strength between the steel wire 1 and the rubber 2 in the neighborhood of the contact surface with the steel wire 1 is increased.
In this process, since almost no thermal conduction is made to the surrounding rubber 2b, the surrounding rubber 2b remains soft.
Since coating the steel wire with the rubber according to the present invention is made by heating only the steel wire 1 with the rubber coated in place of heating whole of the steel wire with the rubber coated, this method provides an advantageous effect such that not only the improvement on the adhesion strength between the wire 1 and the rubber 2 is enhanced but also during molding process the self adhesive ability between adjacent wires with rubber coated and between adjacent rubber sheets will not be lost because unculvanized soft surrounding rubbers 2b are interposed between respective wires coated with rubbers and between respective rubber sheets.
Also, even when the steel wire with rubber coated according to the present invention is subjected to a strain during a molding process and during a culvanization process, peeling off between the steel wire 1 and the rubber 2a in the neighborhood of the contact surface will not be caused because only the unculvanized and soft surrounding rubber 2b flows. Accordingly, the steel wire with the rubber coated without exhibiting peeling off at the boundary surface and having improved adhesion strength as well as a property of being free from coating failure can be provided.
In the process of electro-magnetic induction heating as above, the temperature of the rubber, with which the steel is coated, to be placed into the electro-magnetic induction heating device 20 is preferably 80°C± 10°C and the temperature of the steel code · steel wire to be heated by means of the electro-magnetic induction is preferably 140°C±10°C. Choosing such temperatures, a secure adhesion performance between the steel 1 wire and the rubber 2a in neighborhood of the contact surface can be enhanced further.

Up to now, description has been made on the most preferable Embodiment where coating with the rubber is carried out on to the steel wire 1 which has been already formed into sheet like formation, and yet the present invention is not limited to the application to the above but also applicable to coat a commonly used steel wire · steel and code with thin rubber layer, such as the carcass belt and the beed wire.

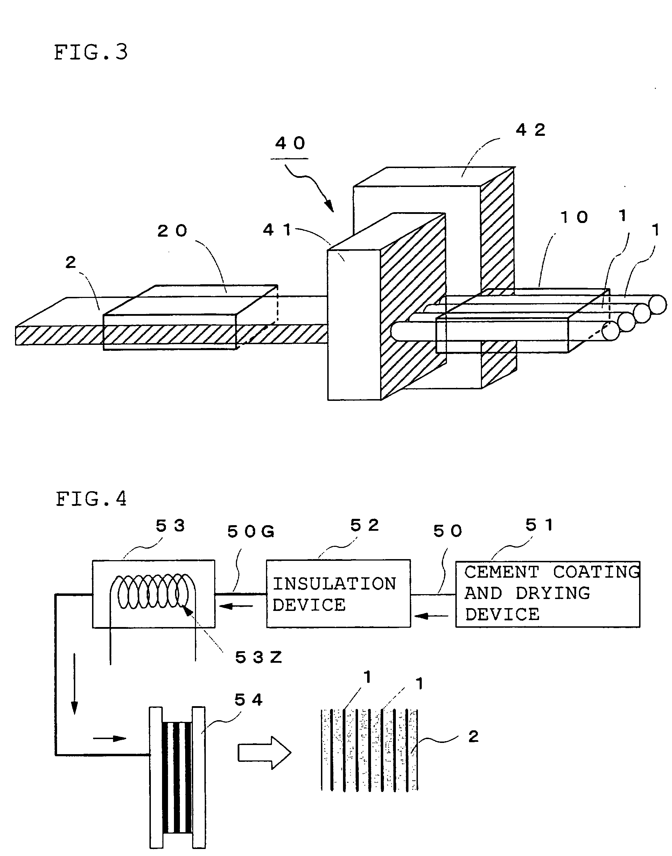

Also, in the above Embodiment description was made on rubber coating simultaneously carried on to both surfaces of respective sides of the steel code · steel wire, but also the coating method according to the present invention is available to the case where rubber coating is made on to only a single surface of a side of the steel code · steel wire or the case where the rubber coating is made successively one surface to another surface basis.
Also, in the above Embodiment, description was made on heating of the steel wire 1 to be coated with rubber by means of the first electro-magnetic induction heating device 10 and yet, since the steel wire 1 is not concealed by the rubber 2 before being coated with rubber, it is not necessarily required to employ an electro-magnetic induction heating means but any other heating means than the electro-magnetic induction can be available. However, choosing the electro-magnetic induction as a heating means, one can take advantageous effects of not only high energy effectiveness as well as obtaining high surface temperature of the steel code · steel wire but also reduction in size of the facility, and thus as exemplified by the Embodiment it is preferable to use the electro-magnetic induction means as a heating means to be applied to heat the steel wire 1 at the stage of pre-covering with the rubber.
Though in the above Embodiment, description was made on the case where the calendar device 30 was employed, nevertheless the present invention is not limited to the arrangement with the use of calendar device 30 but also applicable to other arrangement for coating with rubber using, for example, the wire insulation device 40 having the rubber extrusion device 41 and the insulation head 42 as shown by Fig.3.

The above wire insulation device 40 is used for, for example, coating the beed wire and this is done by forwarding the steel wire 1 to the rubber extrusion device 41 and coating the steel wire 1 with the rubber 2 through controlling inside pressure and temperature of the insulation head 42. In this process too, by heating the steel wire by the first and second electro-magnetic induction heating devices 10 and 20 installed at the positions before and after the wire insulation device 40, respectively so as to heat the steel wire 1 prior to and following after carrying out covering with rubber, thereby the improvement on the adhesion strength between the steel wire 1 and the rubber 2 can be enhanced.

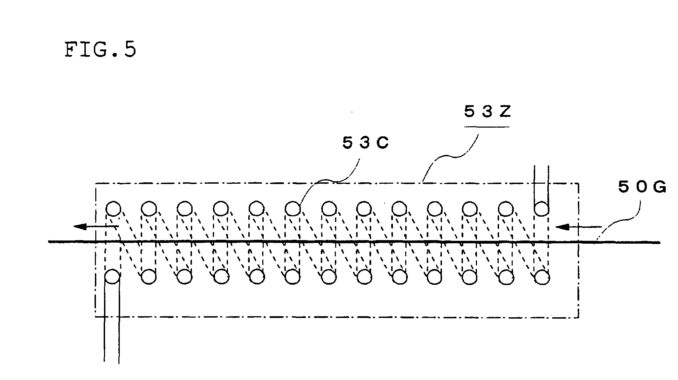

In the above Embodiment, description was made in the case where both surfaces on respective sides of the steel code, which has already been formed into sheet like form, are coated with rubber, but the present invention can also be applicable to coat a monowire with rubber as shown by Fig. 4; namely, the monowire 50, which was coated with cement on its surfaces and dried away by means of the coating and drying device 51, is forwarded to the insulation device 52 through which the monowire 50 is covered with the rubber 2. The wire 50G thus covered with the rubber is heated in the continuously pressurizing and heating device 53 having the electro-magnetic induction means 53Z such that only the steel wire 50G is heated through the electro-magnetic induction accompanying a thermal conduction to surrounding vicinity from the heated wire. After this process, by rolling round a bobbin and cutting the monowire with the rubber coated, the steel wire with rubber coated such as a ply code having an improved adhesion strength between the steel wire 1 and the rubber 2 as well as a property of being free from the coating failure can be obtained.
Similar to the foregoing Embodiment, in this case too, by choosing the temperature of the rubber 2, with which the monowire 50 is coated, to be placed in the continuously pressurizing and heating device 53 to be 80°C±10°C and by choosing the heating temperature during the electro-magnetic induction heating to be 140°C±210°C, improvement on a secure adhesion between the steel wire 1 and the rubber 2 can be attained.
In the electro-magnetic induction means 53Z for example as shown by Fig. 5 when passing the monowire 50G with rubber coated within the spirally wound heating coil 53 made of metal having approximately length of 4 meters, only the steel wire within the monowire 50G is heated, and by virtue of such a heating performance the monowire 50G can be effectively heated. By the way, a concrete heating time period required for heating the monowire 50G can be determined depending on the configuration of the heating coil 53C as well as value of the current to be supplied and yet, since the steel wire can be heated to the order of 140°C within three minutes, time period of seven minutes appears to be sufficient to passing the monowire 50G through the heating coil 53C.

### Industrial Feasibility

As hitherto mentioned, according to the present invention, for bonding the steel code · steel wire which is already covered the with rubber, arrangement is made to raise the temperature of the steel wire · steel code which is already covered with the rubber, by means of the electro-magnetic induction heating so as to intensify the adhesive strength at the boundary surface between the steel code · steel wire and the rubber thereby improving the adhesive strength between the steel wire and the rubber. Furthermore, since the rubber in the surface region is maintained in a soft state, wire with rubber coated having a property of free from coating defect can be obtained.

## Claims

1. A method of coating a steel code · steel wire with a rubber comprising steps of covering the steel code · steel wire with a rubber layer and bonding the steel code · steel wire and the rubber layer wherein, the steel code · steel wire, which has already been covered with the rubber layer, is subjected to an electro-magnetic induction heating.

2. The method of coating the steel code · steel wire with the rubber according to claim 1 wherein, the steel wire · steel code is heated to a temperature falling in the range of 130∼150°C.

3. The method of coating the steel code · steel wire with the rubber according to claim 1 or claim 2 wherein, the electro-magnetic induction heating is carried out while a pressurizing force is being applied to the steel code · steel wire.

4. The method of coating the steel code · steel wire with the rubber according to one of claims 1 ∼ 3 wherein, temperature of the rubber to be heated through the electro-magnetic induction heating is to fall in the range of 70∼90°C.

5. The method of coating a steel code · steel wire with a rubber comprising steps of covering the steel code · steel wire with a rubber layer and bonding the steel code · steel wire and the rubber layer wherein, an electro-magnetic induction heating is applied to the steel code · steel wire prior to be covered with the rubber layer.

6. An apparatus for coating with a rubber having a means for covering a steel code · steel wire with a rubber layer wherein, an electro-magnetic induction heating means is provided at either one of or both of a positions before and after the means for covering the steel code · steel wire with the rubber layer.
